# EUROPÄISCHE PATENTSCHRIFT

(11) **EP 0 572 831 B1**
(45) Veröffentlichungstag und Bekanntmachung des Hinweises auf die Patenterteilung: **25.11.1998**
(21) Anmeldenummer: 93107727.5
(22) Anmeldetag: 12.05.1993
(51) Int. Cl.: H04L 12/56

(54) **Verfahren zur Mitlaufüberwachung und Bitfehlerreduktion für durchgeschaltete Verbindungen in digitalen Kommunikationssystemen**
Method for supervising participation and reducing bit errors for switched communications in a digital system
Méthode pour surveiller la participation et réduire les erreurs de bit pour communications commutées dans un système numérique

(30) Priorität: 01.06.1992 DE 4218054
(43) Veröffentlichungstag der Anmeldung: 08.12.1993
(73) Patentinhaber: SIEMENS AKTIENGESELLSCHAFT, 80333 München (DE)
(72) Erfinder: Löbig, Norbert, Dr. rer. nat., W-6100 Darmstadt (DE)

(56) Entgegenhaltungen:
- EP-A- 0 384 936
- WO-A-84/02439
- DE-A- 2 427 668

## Beschreibung

Die Datenübertragung auf Leitungen und Kabeln ist störenden Einflüssen, wie z.B. elektromagnetischen Feldern, ausgesetzt, die die zu übertragenden Informationen verändern, indem z. B. ein oder mehrere Bits während der Übertragung 'umgedreht' werden. Da insbesondere internationale Weitverkehrs-Verbindungen gegenüber Bitfehlern anfällig sind, haben internationale Normierungsgremien - wie z.B. CCITT - Minimalvorgaben für Bitfehlerraten festgelegt. Optische Übertragungsstrecken sind äußeren Einflüssen erheblich weniger unterworfen, so daß die Übertragungssicherheit bei der Verwendung optischer Übertragungsstrecken sehr hoch ist.

Generell setzt sich jede Übertragungsstrecke aus insgesamt zwei Anteilen zusammen:
- Ein Anteil betrifft die Übertragung der Informationen über eine physikalische Strecke zwischen zwei Knotenpunkten. Diese Strecken werden zunehmend durch optische Nachrichtenkabel realisiert.
- Ein weiterer Anteil betrifft die Durchschaltung der Informationen in den jeweiligen Knoten, in denen Kommunikationssysteme installiert sind.

Durch die Verwendung optischer Übertragungssysteme ist der potentielle Störeinfluß beim übertragungstechnischen Anteil entscheidend verringert worden; während der Durchschaltevorgänge in den Koppelfeldern der Kommunikationssysteme treten demgegenüber häufig Fehler auf.

Aufgrund ihrer zentralen Bedeutung für die Kommunikationssysteme sind die Koppelfelder in der Regel doppelt oder gar mehrfach ausgeführt. Dies ermöglicht es, bei Fehlfunktion einer Koppelfeldebene die Informationen über eine andere Koppelfeldebene durchzuschalten. Zum einen kann dies derart erfolgen, daß sich eine Koppelfeldebene im Ruhezustand befindet, während die andere Koppelfeldebene das aktive Durchschalten der Informationen durchführt; zum anderen können aber auch beide Koppelfeldebenen aktiv die entsprechenden Informationen durchschalten.

Um Informationen über die jeweiligen Koppelfeldebenen durchschalten zu können, muß der Durchschalteweg im Koppelfeld vorher festgelegt und eingestellt werden. Dies bedeutet, daß die am Koppelfeld ankommenden, durchzuschaltenden Informationen über einen vor dem Durchschaltevorgang im allgemeinen bereits feststehenden oder aber erst festzulegenden Eingang in das Koppelfeld eintreten und über einen ebenfalls festzulegenden Ausgang wieder austreten. Die Festlegung, welcher Eingang/Ausgang bei der Durchschaltung eines aus mehreren Informationsworten bestehenden Informationsstromes verwendet wird, erfolgt dabei durch Auswertung der Signalisierungsinformation durch die zentrale Steuerplattform des Kommunikationssystems, die den Durchschalteweg durch das Koppelfeld bestimmt und einstellt. Unter einer zentralen Steuerplattform versteht man generell das Zusammenspiel der zentralen und dezentralen Steuereinheiten eines Kommunikationssystems. Die zentrale Steuerplattform hat die aktuellen Daten über die momentane Belegung der Eingänge/Ausgänge des gesamten Koppelfeldes sowie die benutzten Wege abgespeichert. Damit kann die zentrale Steuerplattform jederzeit noch nicht belegte Ein-/Ausgänge sowie diesen zugeordnete Durchschaltewege durch das Koppelfeld weiteren, noch durchzuschaltenden Informationsströmen zuweisen. Ein eventueller Abbruch oder die Beendigung einer bestehenden Verbindung wird ebenfalls von der zentralen Steuerplattform durchgeführt, was zur Freigabe belegter Eingänge/Ausgänge sowie benutzter Durchschaltewege führt. Die damit verbundenen Daten müssen demzufolge von der zentralen Steuerplattform ständig gepflegt, d. h. bei Bedarf aktualisiert werden. Da es sich hierbei um sich dynamisch ändernde Daten handelt, erfolgt die Pflege im Speicher der zentralen Steuerplattform; ein Abspeichern auf einem externen Speichermedium, wie z. B. einer Festplatte, ist wegen der damit verbundenen langen Zugriffszeit nicht möglich.

Beim Durchschalten von Informationen über eine Koppelfeldebene können sporadische und permanente Fehler auftreten (Bitfehlerrate). Sie äußern sich meistens darin, daß einzelne oder mehrere Bits während des Durchschaltevorganges verfälscht werden, eine unzulässige Bitfehlerrate entsteht oder sogar ein falscher Informationsstrom ausgegeben wird. Temporäre oder dauernde Falschausgabe können die Folge sein; sporadische Fehler haben ihren Ursprung in elektromagnetischen Einkopplungen, in thermischen Einflüssen oder alternden Bauteilen, während permanent auftretende Fehler aus defekten oder verfälschten Haltespeicherbereichen, defekten Sprachspeichern, defekter Adressierlogik für Halte- und Sprachspeicher, aus defekten oder überalterten Bauteilen (wie z. B. Laser) oder einer defekten Stromversorgung resultieren.

Generell sind derartige Fehler nur schwer zu analysieren und zu eliminieren, sofern sie auf die Funktion des Koppelfeldes als Durchschalteeinheit keinerlei Einfluß haben.

Fehlererkennungsverfahren zur Erkennung und Korrektur von Bitfehlern in Koppelfeldern werden bisher z.B. in Form einer Mitlaufüberwachung realisiert. Aus der deutschen Offenlegungsschrift 24 27 668 ist ein solches Verfahren bekannt. Dort wird vor dem eigentlichen Durchschaltevorgang im Koppelfeld den die Information prägenden Informationsworten pro Kanal eine zusätzliche Prüfinformation zugefügt. Die Prüfinformation kann beispielsweise ein Paritätsbit sein. Darunter versteht man die binäre Quersumme über die einzelnen Bits des entsprechenden Informationswortes. Nach dem Durchschaltevorgang wird - im Falle des Paritätsbits - erneut eine binäre Quersumme des durchgeschalteten Informationswortes ermittelt und deren Parität mit dem übertragenen Paritätsbit verglichen. Weichen beide voneinander ab, so liegt ein Übertragungsfehler vor, der in einem entsprechenden Tabellenspeicher festgehalten wird. Somit lassen sich über bestimmte Zeiträume hinweg Aussagen über den Zustand der entsprechenden Koppelfeldebene machen. Mit diesen statistischen Aussagen kann jene Koppelfeldebene zur Durchschaltung der Informationsströme verwendet werden, die in der Vergangenheit die geringste Bitfehlerrate aufgewiesen hat.

Weiterhin wird in der deutschen Patentanmeldung P 41 28 412.7 ein Verfahren zur Mitlaufüberwachung und Bitfehlerreduktion vorgeschlagen. Darin wird für die die Information bildenden Informationsworte in peripheren Einheiten vor dem Durchschaltevorgang eine Prüfinformation ermittelt. Diese wird an das jeweilige Informationswort angehängt. Danach erfolgt eine Duplizierung des um die Prüfinformation ergänzten Informationswortes sowie eine daran anschließend durchgeführte Durchschaltung über beide Koppelfeldebenen. Nach dem Durchschaltevorgang werden die mit der Prüfinformation ergänzten Informationsworte einer erneuten Prüfinformationsermittlung unterzogen und das Resultat mit der mitübertragenen Prüfinformation verglichen. Parallel dazu werden die Informationsworte selbst bitweise miteinander verglichen. Aus beiden Bewertungen können dann Rückschlüsse gezogen werden, ob ein Übertragungsfehler vorliegt oder auch nicht, bzw. können - wenn auch begrenzte - Aussagen darüber gemacht werden, welches Bit verfälscht wurde, und in diesem Fall Korrekturen durchgeführt werden. Problematisch an dieser Vorgehensweise ist, daß eine eindeutige Aussage nicht immer möglich ist. In diesem Fall wird auf eine statistische Funktion f(s) zurückgegriffen, die dann die Informationsworte zum Endteilnehmer weiterleitet, die über die Koppelfeldebene geschaltet wurden, die in der Vergangenheit die besseren statistischen Qualitätsdaten geliefert hat. In diesem Fall besteht jedoch mit einer gewissen Wahrscheinlichkeit die Gefahr, daß das verfälschte Informationswort zum Endteilnehmer weitergeleitet wird.

Weiterhin ist bei diesem Verfahren eine genaue Fehlerlokalisierung nur in grobem Umfang möglich. Zwar können Aussagen darüber gemacht werden, welche Koppelfeldebene den Übertragungsfehler verursacht hat, eine detailliertere Eingrenzung ist jedoch nicht möglich.

Schwerwiegende Auswirkung haben darüber hinaus Fehler, die eine fehlerhafte Durchschaltung im Koppelfeld bewirken, d.h. daß ein an einem bestimmten Eingang des Koppelfeldes eindringender Informationsstrom nicht an dem vorgesehenen Ausgang das Koppelfeld verläßt, sondern aufgrund eines sporadischen oder permanenten aufgetretenen Fehlers beim Einstellvorgang über einen falschen Ausgang zu irgendeinem Endteilnehmer weitergeleitet wird. Derartige Fehler können zentral nicht entdeckt werden; oft stellt erst der Endteilnehmer die fehlerhafte Durchschaltung fest.

Weiterhin kann die Tatsache, daß alle dynamischen Einstelldaten im Speicher der zentralen Steuerplattform abgespeichert sind, zu Problemen führen. So sind etwa im Falle eines Totalausfalls relevanter Teile der zentralen Steuerplattform auch alle darin abgespeicherten Einstelldaten des Koppelfeldes sowie die Daten der Eingangs-/Ausgangsbelegung verlorengegangen. Das Auslagern auf ein externes Speichermedium, wie beispielsweise eine Festplatte, ist nicht möglich, da die Einstelldaten dynamisch aktualisiert werden müssen und damit insbesondere in Zeiten hoher Verkehrsauslastung die Schreib/Lesevorgänge auf der Festplatte zu viel Zeit in Anspruch nehmen würden. Dies hat zur Folge, daß alle bestehenden Verbindungen abgebrochen werden und die zugehörigen Datenspeicher initialisiert werden müssen oder nach den Hardware-Einstellungen in komplexer Weise aktualisiert werden müssen.

Aus der europäischen Patentanmeldung EP 0 384 936 ist ein Verfahren und eine Schaltungsanordnung zum Weiterleiten von auf Zubringerleitungen übertragenen Nachrichtenpaketen über eine Paketvermittlungseinrichtung bekannt. Demgemäß wird zum Weiterleiten von auf Zubringerleitungen im Zuge von virtuellen Verbindungen nach einem asynchronen Übertragungsverfahren übertragenen, einen die jeweilige virtuelle Verbindung bezeichnenden Paketkopf aufweisenden Nachrichtenpaketen über eine wenigstens zwei redundante Koppelvielfache aufweisende Paketvermittlungseinrichtung zu mit dieser verbundenen Abnehmerleitungen hin vorgesehen, daß für jedes der auf einer der Zubringerleitungen im Zuge einer virtuellen Verbindung übertragenen Nachrichtenpakete durch Vermehrfachen eine Nachrichtenpaket-Gruppe mit einer der Anzahl der redundanten Koppelvielfache entsprechenden Anzahl von identischen Nachrichtenpaketen gebildet wird. Wie allerdings im Falle eines Fehlers zu Fehleranalysezwecken vorzugehen ist, wird hier nicht angesprochen.

In der PCT-Anmeldung mit der internationalen Veröffentlichungsnummer WO 84/02439 ist ebenfalls ein Paketvermittlungssystem offenbart, in dem Fehlermessungen durchgeführt werden. Hier wird zur Identifizierung der Verbindung eine Trunknummer verwendet. Diese stellt eine für den Ort des Eindringens in ein Kommunikationssystem representative Nummer dar.Die Trunknummer gibt aber lediglich die Nummer des Trunkcontrollers an, der zwischen Interfaceeinheiten und Koppelfeld angeordnet ist.Zudem hängen mehrere Teilnehmer an einem Trunkcontroller, so daß im Fehlerfall ein eindeutiges Identifizieren der Verbindung nicht möglich ist.

Der Erfindung liegt die Aufgabe zugrunde, die Auswirkung von Fehlern insbesondere im Hinblick auf ein fehlerbehaftetes Durchschalten zu Endteilnehmern in den Koppelfeldern digitaler Kommunikationssysteme möglichst gering zu halten.

Die Aufgabe wird durch das im Patentanspruch 1 angegebene Verfahren gelöst.

Anspruch 2 betrifft eine erste Ausgestaltung der Prüfbewertungsinformation. Dabei handelt es sich um ein aus einer binären Quersumme gewonnenes Prüfbit. Die binäre Quersumme wird dabei aus dem Informationswort und dem angefügten Quellennummernbit gebildet. Allerdings sind auch weitere Prüfbewertungsverfahren denkbar;so kann beispielsweise die binäre Quersumme etwa nur mit jedem zweiten Bit gebildet werden. Weiterhin kann die Prüfbewertung unter Zuhilfenahme von mathematischen Funktionen - wie etwa einer Multiplikation oder Division - gebildet werden.

Die Quellennummer wird in einer 1-Bit-Information verschlüsselt. Um die vollständige Quellennummer zu erfassen, müssen daher diese Bits solange gespeichert und aufgefüllt werden, bis die Quellennummer vollständig ist. Die Quellennummer ist eine charakteristische Zahl für den Ort, wo der Informationsstrom in das Kommunikationssystem eingetreten ist. Dieser Eingangsort wird durch eingangsseitige Schnittstellenelemente gebildet. Der Durchschaltevorgang selbst ist dadurch charakterisiert, daß dem jeweiligen Eingangsort ein ausgewählter Ausgang, der durch ausgangsseitige Schnittstellenelemente gebildet wird, zugeordnet ist. Da die Quellennummer zusammen mit dem Informationsstrom durchgeschaltet wird, kann an den ausgangsseitigen Schnittstellenelementen festgestellt werden, ob die Durchschaltung durch das Koppelfeld hinsichtlich der Zuordnung Eingang/Ausgang korrekt war.

Anspruch 4 betrifft eine erste Ausgestaltung der Erfindung. Es ist vorgesehen, daß die Quellennummer beim Verbindungsaufbau in den ausgangsseitigen Schnittstellenelementen über einen Kommunikationskanal zwischen zentraler Steuerplattform und Schnittstellenelement hinterlegt wird. Sind die von beiden Koppelfeldebenen zugelieferten Informationsströme unterschiedlich und enthalten verschiedene Quellennummern, können die ausgangsseitigen Schnittstellenelemente selbständig den korrekt durchgeschalteten Informationsstrom auswählen und ausgeben. Eine zweite Ausgestaltung der Erfindung ist in Anspruch 5 definiert. Es ist vorgesehen, daß im Falle einer permanenten Ungleichheit der von den jeweiligen Koppelfeldebenen angelieferten Informationsströme sowie einer Nichtübereinstimmung der zugehörigen Quellennummern eine Nachricht von den ausgangsseitigen Schnittstellenelementen zur zentralen Steuerplattform übertragen wird. Diese entscheidet anhand ihrer intern abgespeicherten Verbindungsdaten und der in der Nachricht enthaltenen Information über Zielnummer und Quellennummern, welcher der zu dem Schnittstellenelement durchgeschalteten Informationsströme korrekt übertragen wurde, und teilt das Resultat den ausgangsseitigen Schnittstellenelementen mit. Eine dritte Ausgestaltung der Erfindung ist in Anspruch 6 definiert. Eine Übertragungsprozedur überträgt die in der zentralen Steuerplattform abgespeicherten Quellennummern zyklisch zu den jeweiligen ausgangsseitigen Schnittstellenelementen. Diese können damit im Falle einer permanenten Diskrepanz der durchgeschalteten Informationsströme selbst entscheiden, welche der Informationsströme korrekt übertragen wurden. Eine derartige Vorgehensweise verbindet 'dynamische' Gesichtspunkte mit einer schnellen Reaktion im Fehlerfall.

In Anspruch 7 ist die Anwendung der Erfindung auf asynchron eingestellte Koppelfelder definiert. Dabei muß beachtet werden, daß die Anwendung des erfindungsgemäßen Verfahrens erst nach einer hinreichend langen Schutzzeit erfolgt, da erst nach dieser Zeit sichergestellt ist, daß beide Koppelfeldebenen durchgeschaltet sind. Weiterhin kann das erfindungsgemäße Verfahren auf einzelne Koppelfeldkomponenten eines Koppelfeldes angewendet werden. Eine derartige Ausgestaltung stellt sicher, daß bereits innerhalb des Koppelfeldes die weiterzugebenden Informationsströme und Bitfehler bereinigt sind.

Vorteilhaft an der Erfindung ist insbesondere, daß nach einem Totalausfall der zentralen Steuerplattform die dort abgespeicherten Verbindungsdaten unmittelbar aus den in den ausgangsseitigen Schnittstellenelementen verfügbaren Quellennummern regeneriert werden können, was den Erhalt bestehender Verbindungen wesentlich vereinfacht.

Die Erfindung wird anhand dreier figürlich dargestellter Ausführungsbeispiele näher erläutert. Es zeigen:
- Figur 1: ein Koppelfeld eines digitalen Kommunikationssystems in doppelter Ausgestaltung;
- Figuren 2a und 2b: die Vorgehensweise beim erfindungsgemäßen Verfahren; und
- Figur 3: eine Detaildarstellung des Koppelfeldes aus Figur 1.

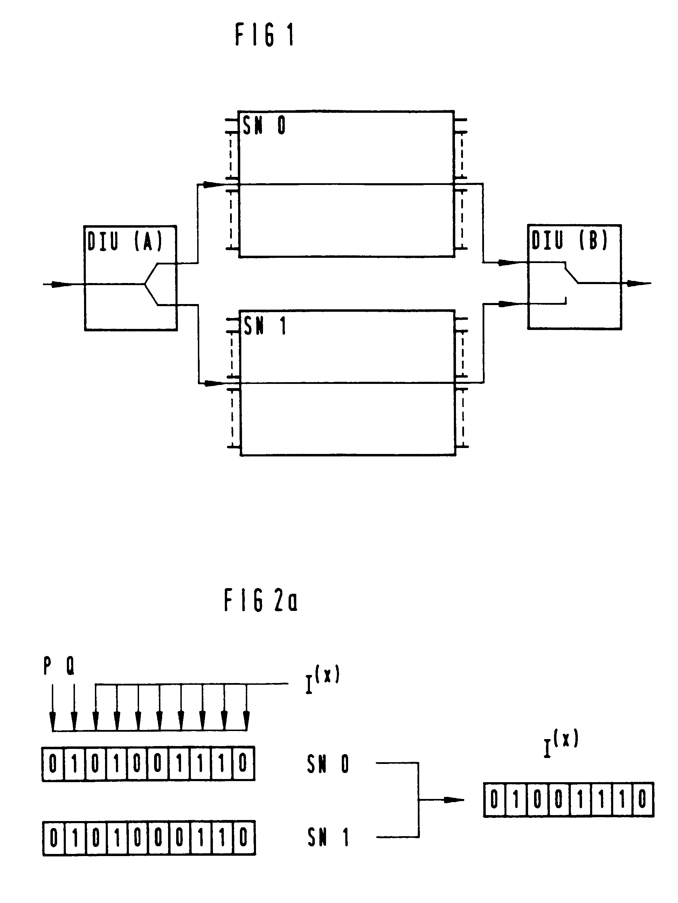

FIG 1 zeigt ein Koppelfeld SN eines digitalen Kommunikationssystems KS. Das Koppelfeld SN ist doppelt ausgestaltet und gliedert sich in zwei Koppelfeldebenen SN₀, SN₁. Als Schnittstelle zwischen dem Kommunikationsnetz und dem Kommunikationssystem KS fungieren die eingangsseitigen bzw. ausgangsseitigen Schnittstellenelemente DIU(A), DIU(B).

In den eingangsseitigen Schnittstellenelementen DIU(A) wird ein in das Kommunikationssystem KS eindringender, aus einer Vielzahl von Informationsworten I^{(o)}...I^{(N)} bestehender Informationsstrom vor dem Durchschaltevorgang durch das Koppelfeld SN mit einer für das jeweilige Informationswort I^{(x)} charakteristischen Zusatzinformation ZU versehen.

Generell ist dem Eingang der eingangsseitigen Schnittstellenelemente DIU(A), an dem die Informationsworte eingedrungen sind, eine Quellennummer Q fest zugeordnet. Ferner wird durch Auswertung der Signalisierungsinformation eine mit der Quellennummer Q korrespondierende Zielnummer Z, d. h. der Ausgang, aus dem die Informationsworte die ausgangsseitigen Schnittstellenelemente DIU(B) nach dem Durchschaltevorgang wieder verlassen, ermittelt. Die Quellennummer Q, sowie die Zielnummer Z werden in der zentralen Steuerplattform CP tabellarisch abgespeichert. Aus beiden Größen ermittelt die zentrale Steuerplattform CP unter Zuhilfenahme eines geeigneten Algorithmus den Durchschalteweg im Koppelfeld SN und stellt ihn ein. Damit legt die zentrale Steuerplattform CP fest, welchen Weg durch das Koppelfeld SN der durchzuschaltende Informationsstrom I^{(O)}...I^{(N)} benutzen muß.

Im Ausführungsbeispiel wird davon ausgegangen, daß ein Informationswort I^{(x)} aus 8 Bit besteht. In den eingangsseitigen Schnittstellenelementen DIU(A) werden die ankommenden Informationsworte I^{(o)}...I^{(N)} zunächst mit der, dem jeweiligen Eingang der eingangsseitigen Schnittstellenelemente DIU(A) fest zugeordneten Quellennnummer Q versehen, und diese anschließend als neuntes Bit an das Informationswort I^{(x)} bitweise über mehrere Informationsworte hinweg angehängt. Anschließend erfolgt eine Paritätsbildung über das Informationswort I^{(x)} und das jeweilige Quellennummernbit Q, deren Resultat als Paritätsbit P in Bit 10 festgehalten wird. Jedes Informationswort I^{(x)} ist also vor dem Durchschaltevorgang mit einer 2 Bit breiten, aus dem Paritätsbit P und dem Quellennummernbit Q bestehenden Zusatzinformation ZU beaufschlagt. Danach erfolgt eine spiegelbildliche Aufspaltung des Informationswortes I^{(x)} zusammen mit der Zusatzinformation ZU in zwei identische Gebilde, wobei jedes Informationswort I^{(x)} mit seiner Zusatzinformation ZU über die jeweilige Koppelfeldebene SN₀, SN₁ unter Berücksichtigung des durch die zentrale Steuerplattform CP festgelegten Durchschalteweges geleitet wird.

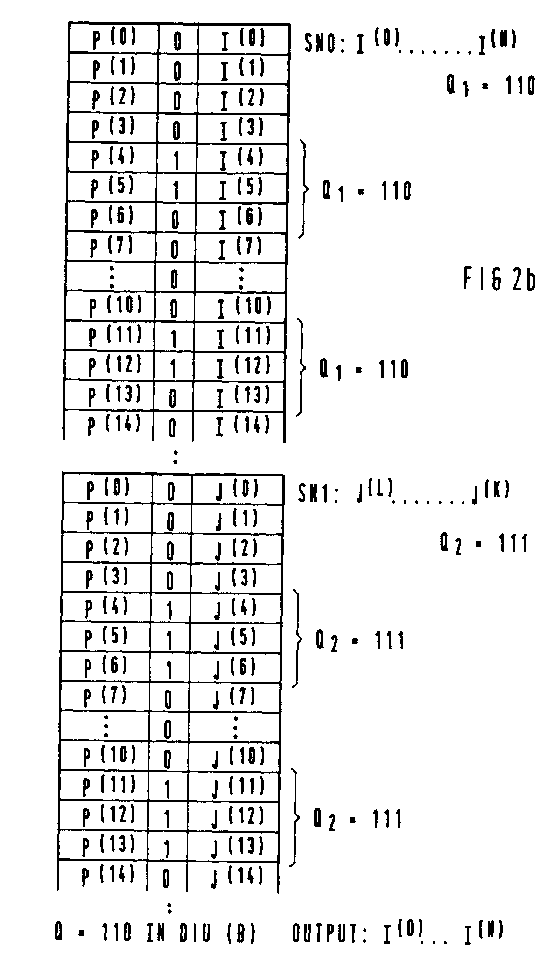

In FIG 2 a ist die erfindungsgemäße Vorgehensweise detailliert aufgezeigt.

In den ausgangsseitigen Schnittstellenelementen DIU(B) werden nach der Durchschaltung die Informationsworte I^{(x)} zusammen mit ihrer mitübertragenen Zusatzinformation ZU einer erneuten Bewertung unterzogen. Zum einen findet in einer ersten Bewertung eine erneute Paritätsprüfung beider durchgeschalteter, um das Quellennummerbit Q ergänzter Informationsworte I^{(x)} statt. Das Resultat jener Paritätsprüfung wird mit dem mitübertragenen Paritätsbit P verglichen. In einer zweiten Bewertung werden beide durchgeschalteten Informationsworte I^{(x)} zusammen mit dem mitübertragenen Quellennummernbit Q bitweise miteinander verglichen. Eine Kombination beider Bewertungen läßt Rückschlüsse darüber zu, welches der Informationsworte I^{(x)} verfälscht übertragen wurde. Bei Nichtübereinstimmung der Informationsworte I^{(x)} beider Koppelfeldebenen SN₀, SN₁ wird das Informationswort I^{(x)} zum Endteilnehmer weitergeleitet, das inklusive Quellennummernbit Q konsistent hinsichtlich seiner mitübertragenen Paritätsinformation P ist. Falls diese Bedingung nicht erfüllt ist, wird das Informationswort I^{(x)} zum Endteilnehmer weitergeleitet, das über die Koppelfeldebene mit den besseren statistischen Qualitätsdaten geleitet wurde. Diese sind in einer statistischen Funktion f(s) festgehalten.

FIG 2 b zeigt das erfindungsgemäße Verfahren im Falle einer Diskrepanz der Quellennummern Q.

Im vorliegenden Ausführungsbeispiel wird nun davon ausgegangen, daß durch das Auftreten temporärer oder permanenter Fehler eine Falschdurchschaltung in einer Koppelfeldebene vorliegt, so daß in dem ausgangsseitigen Schnittstellenelement DIU(B) zwei permanent verschiedene, hinsichtlich ihrer Parität jedoch in sich konsistente Informationsströme I⁽⁰⁾...I^{(N)} und J^{(l)}...J^{(k)} eintreffen. Dies ist durch den in der zweiten Bewertung durchgeführten bitweisen Vergleich feststellbar. Somit wird im vorliegenden Fall davon ausgegangen, daß die in der ersten Bewertung durchgeführte Paritätsbildung keine Rückschlüsse darüber zuläßt, welcher der beiden über Koppelfeldebene SN₀ und SN₁ geleiteten Informationsströme I^{(x)} verfälscht übertragen wurde.

Für eine genauere Bestimmung muß nun ein weiteres Kriterium hinzugezogen werden. In einer ersten Ausgestaltung der Erfindung werden den ausgangsseitigen Schnittstellenelementen DIU(B) unter Benutzung eines Kommunikationskanals zwischen der zentralen Steuerplattform und den ausgangsseitigen Schnittstellenelementen DIU(B) pro Verbindungsaufbau die den jeweiligen Ausgängen zugeordneten Quellennummern Q mitgeteilt. Damit sind die Quellennummern Q aktuell in den ausgangsseitigen Schnittstellenelementen DIU(B) hinterlegt. Im voranstehend beschriebenen Fehlerfall kann damit das ausgangsseitige Schnittstellenelement DIU(B) eigenständig den korrekt durchgeschalteten Informationsstrom bestimmen und ausgeben. Fehlerdaten können peripher abgespeichert oder an die zentrale Steuerplattform CP gemeldet werden.

In einer weiteren Ausgestaltung der Erfindung senden die ausgangsseitigen Schnittstellenelemente DIU(B) im Falle der Verschiedenheit der über beide Koppelfeldebenen SN₀, SN₁ angelieferten Informationsströme I^{(O)}...I^{(N)}, J^{(l)}... J^{(k)} eine Nachricht zur zentralen Steuerplattform CP. Diese enthält die Zielnummer sowie die Quellennummern Q der über beide Koppelfeldebenen SN₀, SN₁ durchgeschalteten Informationsströme I^{(O)}...I^{(N)}, J^{(l)}...J^{(k).} Die zentrale Steuerplattform CP ermittelt für beide Quellennummern Q mit Hilfe ihrer intern abgespeicherten Verbindungsdaten die zugehörigen Zielnummern. Hiermit ist in einfacher Weise ermittelbar, welcher der beiden durchgeschalteten Informationsströme korrekt übertragen wurde. Das Resultat dieser Bewertung wird von der zentralen Steuerplattform CP den ausgangsseitigen Schnittstellenelementen DIU(B) über eine entsprechende Nachricht zur Auswahl des korrekten Informationsstromes mitgeteilt.

In einer dritten Ausgestaltung der Erfindung werden von einer Übertragungsprozedur U die in der zentralen Steuerplattform CP abgespeicherten Quellennummern Q zyklisch zu den zugehörigen ausgangsseitigen Schnittstelleneinheiten DIU(B) übertragen und dort abgespeichert. Damit existiert in den ausgangsseitigen Schnittstelleneinheiten DIU(B) ein Abbild der in der zentralen Steuerplattform CP geführten Quellennummern Q. Im beschriebenen Fehlerfall können damit die ausgangsseitigen Schnittstellenelemente DIU(B) mit großer Wahrscheinlichkeit sofort eigenständig entscheiden, welcher der von beiden Koppelfeldebenen SN₀, SN₁ angelieferte Informationsstrom zum Endteilnehmer weiterzuleiten ist. Diese Vorgehensweise ist für digitale Kommunikationssysteme sowohl unter dynamischen Gesichtspunkten als auch unter dem Aspekt der sofortigen Fehlerfreischaltung sehr vorteilhaft, da der Entscheidungsprozeß weitgehend dezentral ohne Unterbrechung anderer Software-Prozesse vollzogen werden kann, ohne zugleich hohe Ansprüche an die Prozessordynamik der zentralen Steuerplattform CP zu stellen.

Im Falle des Totalausfalls relevanter Teile der zentralen Steuerplattform CP sind die darin abgespeicherten Verbindungsdaten verloren. Durch das erfindungsgemäße Verfahren stehen die in den ausgangsseitigen Schnittstelleneinheiten DIU(B) vorhandenen Quellennummern Q zur Aktualisierung der Verbindungsdaten der zentralen Steuerplattform CP zur Verfügung. Dies bedeutet in der Praxis, daß die zentrale Steuerplattform CP sehr schnell wieder in Betrieb genommen werden kann, ohne dabei bestehende Verbindungen zu unterbrechen.

Das erfindungsgemäße Verfahren ist weiterhin auf asynchron eingestellte Koppelfeldebenen anwendbar. Sie sind dadurch charakterisiert, daß die Durchschaltung von Informationsströmen über die jeweiligen Koppelfeldebenen zu unterschiedlichen Zeitpunkten erfolgt und somit in den ausgangsseitigen Schnittstellenelementen DIU(B) kurzzeitig Informationsströme von verschiedenen Quellen anstehen. Daher ist zu beachten, daß eine hinreichend lange Schutzzeit eingerichtet werden muß, in der die Verschiedenheit der über beide Koppelfeldebenen SN₀, SN₁ geleiteten Informationsströme keine Fehlerreaktion in den ausgangsseitigen Schnittstellenelementen DIU(B) hervorruft. Erst nach Ablauf dieser Schutzzeit kann das erfindungsgemäße Verfahren durchgeführt werden.

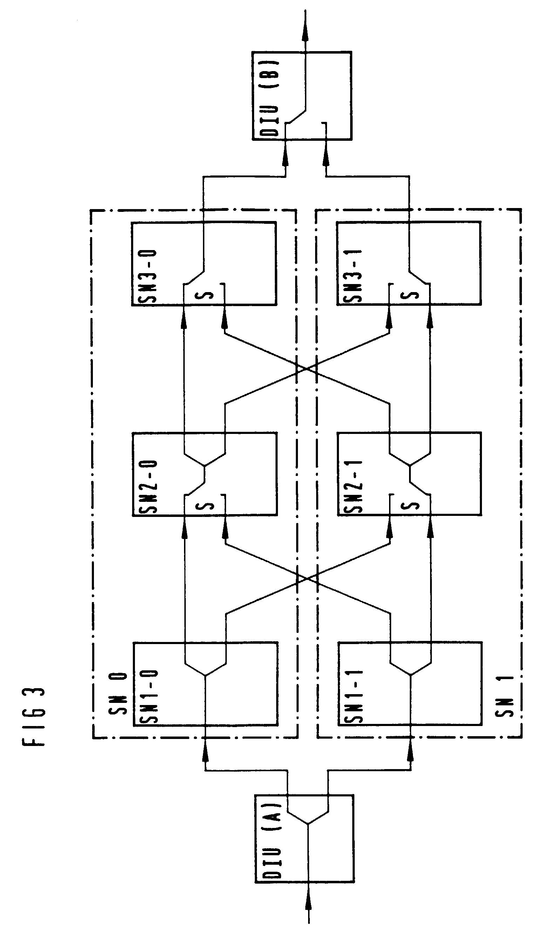

In FIG 3 ist das aus FIG 1 bekannte Koppelfeld SN mit den Koppelfeldebenen SN₀, SN₁ sowie den eingangsseitigen bzw. ausgangsseitigen Schnittstellenelementen DIU(A), DIU(B) detaillierter aufgezeigt.

Eine Koppelfeldebene SN₀, SN₁ besteht dabei aus mehreren - im vorliegenden Ausführungsbeispiel drei - Koppelfeldkomponenten. Für die Koppelfeldebene SN₀ sind dies die Koppelfeldkomponenten SN₁₋₀, SN₂₋₀, SN₃₋₀ und für die Koppelfeldebene SN₁ die Koppelfeldkomponenten SN₁₋₁, SN₂₋₁, SN₃₋₁. Aus Sicherheitsgründen sind die einzelnen Koppelfeldkomponenten untereinander ausgekreuzt. Dies bedeutet, daß im Fehlerfall die in den jeweiligen Koppelfeldkomponenten aufgezeigten Schaltereinheiten S auf die jeweilige andere Koppelfeldkomponente umgelegt werden können.

Das erfindungsgemäße Verfahren kann auch auf die Durchschaltung von Informationsworten I^{(O)}...I^{(N)} in einzelnen Koppelfeldkomponenten angewendet werden. Dies bedeutet, daß bereits in den Koppelfeldkomponenten SN_{x-y} (x = 2,3; y = 0,1) entschieden wird, welches Informationswort I^{(x)} korrekt über die davorliegende Koppelfeldkomponente SN_{(x-1)-y} durchgeschaltet wurde. Weiterhin kann hier durch Auswertung der Quellennummer Q in den Koppelfeldkomponenten SN_{x-y} in der beschriebenen Weise ermittelt werden, wo der Übertragungsfehler aufgetreten ist. In diesem Fall wäre die Fehlerlokalisierung noch exakter durchführbar als bei Anwendung des erfindungsgemäßen Verfahrens auf das Koppelfeld SN als Gesamtheit.

## Patentansprüche

1. Verfahren zur Mitlaufüberwachung und Bitfehlerreduktion für durchgeschaltete Verbindungen in Kommunikationssystemen mit einem aus wenigstens zwei Koppelfeldebenen (SN₀, SN₁) bestehenden Koppelfeld (SN),
**dadurch gekennzeichnet,**
daß an eingangsseitigen, aus mehreren Eingängen bestehenden Schnittstellenelementen (DIU(A)) die ankommenden, einen Informationsstrom bildenden Informationsworte (I⁽⁰⁾...I^{(N)}) pro Informationswort (I^{(X)}) mit einer aus zwei Teilinformationen bestehenden Zusatzinformation (ZU⁽⁰⁾...ZU^{(N)}) versehen werden, wobei die erste Teilinformation (ZU₁^{(o)}...ZU₁^{(N)}) zu einer für den jeweiligen Eingang der eingangsseitigen Schnittstellenelemente (DIU(A)) charakteristische Quellennummer (Q) gehört,
daß anschließend aus den Informationsworten (I^{(o)}...I^{(N)}) und der ersten Teilinformation (ZU^{(o)}...ZU₁^{(N)}) die zweite Teilinformation (ZU₂^{(o)} ... ZU₂^{(N)}) gebildet wird, und die Informationsworte (I^{(o)}...I^{(N)}) zusammen mit der Zusatzinformation (ZU^{(o)}...ZU^{(N)}) dupliziert und über je eine Koppelfeldebene (SN₀, SN₁) zu ausgewählten ausgangsseitigen Schnittstellenelementen (DIU(B) weitergeleitet werden,
daß in den ausgewählten ausgangsseitigen Schnittstellenelementen (DIU(B)) in einer ersten Bewertung der Informationsworte (I^{(O)}...I^{(N)}) sowie der mitübertragenen ersten Teilinformation (ZU₁^{(o)}... ZU₁^{(N)}) erneut eine zweite Teilinformation (ZU₂^{(o)}...ZU₂^{(N)}) gebildet wird, die mit der mitübertragenen zweiten Teilinformation verglichen wird und in einer zweiten Bewertung ein bitweiser Vergleich der Informationsworte (I^{(o)}...I^{(N)}) und der mitübertragenen ersten Teilinformation (ZU₁^{(o)}...ZU₁^{(N)}) durchgeführt wird, und
daß die ausgangsseitigen Schnittstellenelemente (DIU(B) im Zusammenwirken mit einer zentralen Steuerplattform (CP) und in Abhängigkeit vom Resultat der ersten und zweiten Bewertung jeweils eines der parallel durchgeschalteten Informationsworte (I^{(o)}...I^{(N)}) zum Endteilnehmer weiterleiten.

2. Verfahren nach Anspruch 1,
**dadurch gekennzeichnet,**
daß die zweite Teilinformation (ZU₂⁽⁰⁾...ZU₂^{(N)}) ein aus einer binären Quersumme des jeweiligen Informationswortes (I⁽⁰⁾...I^{(N)}) und der zugehörigen ersten Teilinformation (ZU₁^{(o)} ...ZU₁^{(N)}) gewonnenes Prüfbit ist.

3. Verfahren nach Anspruch 1 oder 2,
**dadurch gekennzeichnet,**
daß falls die Kombination der ersten und zweiten Bewertung keine Fehlerzuordnung liefert, die Durchschaltung über die Koppelfeldebene (SN₀, SN₁) mit den besseren statistischen Qualitätsdaten informationswortorientiert erfolgt.

4. Verfahren nach Anspruch 1, 2 oder 3,
**dadurch gekennzeichnet,**
daß pro Verbindungsaufbau in den ausgangsseitigen Schnittstellenelementen (DIU(B)) über einen Kommunikationskanal die Quellennummer (Q) durch die zentrale Steuerplattform (CP) hinterlegt wird und bei einer in der zweiten Bewertung ermittelten Nichtübereinstimmung der über beide Koppelfeldebenen durchgeschalteten Quellennummern (Q) die ausgangsseitigen Schnittstellenelemente (DIU(B)) unter Zuhilfenahme der hinterlegten Quellennummern (Q) den Informationsstrom (I⁽⁰⁾...I^{(N)}) in Richtung Endteilnehmer weiterleiten, dessen mitübertragene Quellennummer (Q) mit der in den ausgangsseitigen Schnittstellenelementen (DIU(B)) hinterlegten identisch ist.

5. Verfahren nach Anspruch 1, 2 oder 3,
**dadurch gekennzeichnet,**
daß bei einer in der zweiten Bewertung ermittelten Nichtübereinstimmung der Quellennummer (Q) eine Nachricht von den ausgangsseitigen Schnittstellenelementen (DIU(B)) zur zentralen Steuerplattform (CP) abgesetzt wird, die diese dazu veranlaßt, die intern abgespeicherte, dem Informationsstrom (I⁽⁰⁾...I^{(N)}) zugehörige Quellennummer (Q) als zusätzliches Kriterium dazu zu benutzen, welche der beiden durchgeschalteten, nichtübereinstimmenden Informationsströme bzw. Quellennummern (Q) korrekt ist, und daß das Resultat den ausgangsseitigen Schnittstellenelementen (DIU(B)) zur Auswahl des korrekten Informationsstromes mitgeteilt wird.

6. Verfahren nach Anspruch 1, 2 oder 3,
**dadurch gekennzeichnet,**
daß von einer Übertragungsprozedur (U) die in der zentralen Steuerplattform (CP) abgespeicherten, die Einstelldaten des Koppelfeldes (SN) bestimmenden Quelle/Zielrelationen zyklisch in Form der Quellennummern (Q) zu den ausgangsseitigen Schnittstellenelementen (DIU(B)) über einen Kommunikationskanal übertragen werden und daß letztere dazu benutzt werden, im Falle einer in der zweiten Bewertung ermittelten Nichtübereinstimmung der Quellennummern (Q) zu entscheiden, welche der beiden nichtübereinstimmenden Quellennummern (Q) richtig ist, und damit welcher Informationsstrom (I⁽⁰⁾...I^{(N)}) in Richtung Endteilnehmer weiterzugeben ist, sobald die vom Kommunikationskanal hinterlegte Quellennummer mit einer der in den beiden Koppelfeldebenen übertragenen zusammenfällt.

7. Verfahren nach einem der vorhergehenden Ansprüche,
**dadurch gekennzeichnet,**
daß im Falle systembedingt asynchron eingestellter Koppelfelder (SN₀, SN₁) die zweite Bewertung erst dann durchgeführt wird, wenn eine hinreichend lange Schutzzeit abgelaufen ist.

8. Verfahren nach Anspruch 4, 5 oder 6,
**dadurch gekennzeichnet,**
daß bei Wiederanlauf der zentralen Steuerplattform (CP) nach Totalausfall während des Initialisierungsprozesses die vermittlungstechnischen Verbindungsdaten aus den in den ausgangsseitigen Schnittstellenelementen (DIU(B)) abgespeicherten Quellennummern (Q) erneut generiert werden können.

## Claims

1. Method for the synchronous monitoring and reduction of bit errors for circuit-switched connections in communication systems comprising a switching network (SN) consisting of at least two switching network planes (SN₀, SN₁), characterized in that the incoming information words (I^{(O)}...I^{(N)}), forming an information stream are provided with additional information (ZU^{(O)}...ZU^{(N)}) consisting of two part-information items, per information word (I^{(X)}) at input interface elements (DIU(A)) consisting of a number of inputs, the first part-information item (ZU₁^{(O)}...ZU₁^{(N)}) belonging to a source number (Q) characteristic of the respective input of the input interface elements (DIU(A)),
in that subsequently the second part-information item (ZU₂^{(O)}...ZU₂^{(N)}) is formed from the information words (I^{(O)}...I^{(N)}) and first part-information item (ZU^{(O)}...ZU₁^{(N)}) and the information words (I^{(O)}...I^{(N)}), together with the additional information (ZU^{(O)}...ZU^{(N)}) are duplicated and forwarded to selected output interface elements (DIU(B)) via in each case one switching network plane (SN₀, SN₁),
in that in the selected output interface elements (DIU(B)), a second part-information item (ZU₂^{(O)}...ZU₂^{(N)}) is again formed in a first evaluation of the information words (I^{(O)}...I^{(N)}) and the accompanying first part-information item (ZU₁^{(O)}...ZU₁^{(N)}), which second part-information item is compared with the accompanying second part-information item, and in a second evaluation, a bit-by-bit comparison of the information words (I^{(O)}...I^{(N)}) and the accompanying first part information item (ZU₁^{(O)}...ZU₁^{(N)}) is carried out, and
in that the output interface elements (DIU(B)) interacting with a central control platform (CP) and in dependence on the result of the first and second evaluation, in each case forward one of the information words (I^{(O)}...I^{(N)}), connected through in parallel, to the terminating subscriber.

2. Method according to Claim 1, characterized in that the second part-information item (ZU₂^{(O)}...ZU₂^{(N)}) is a check bit obtained from a binary checksum of the respective information word (I^{(O)}...I^{(N)}) and the associated first part-information item (ZU₁^{(O)}...ZU₁^{(N)}).

3. Method according to Claim 1 or 2, characterized in that, if the combination of the first and second evaluation does not supply an error allocation, the switching-through is done in information-word-oriented manner via the switching network plane (SN₀, SN₁) having the better statistical quality data.

4. Method according to Claim 1, 2 or 3, characterized in that for each call set-up, the source number (Q) is stored in the output interface elements (DIU(B)) by the central control platform (CP) via a communication channel and in the case of a mismatch of the source numbers (Q) switched through via both switching network planes, found in the second evaluation, the output interface elements (DIU(B)), with the assistance of the stored source numbers (Q), forward the information stream (I^{(O)}...I^{(N)}) in the direction of the terminating subscriber, the accompanying source number (Q) of which is identical with that stored in the output interface elements (DIU(B)).

5. Method according to Claim 1, 2 or 3, characterized in that, in the case of a mismatch of the source number (Q), found in the second evaluation, a message is transmitted from the output interface elements (DIU(B)) to the central control platform (CP), which message causes the latter to use the internally stored source number (Q) belonging to the information stream (I^{(O)}...I^{(N)}) as an additional criterion for which of the two non-matching information streams or source numbers (Q) switched through is correct, and in that the result is reported to the output interface elements (DIU(B)) for selection of the correct information stream.

6. Method according to Claim 1, 2 or 3, characterized in that the source/destination relations stored in the central control platform (CP) and determining the adjustment data for the switching network (SN) are cyclically transmitted in the form of the source numbers (Q) via a communication channel to the output interface elements (DIU(B)) by a transmission procedure (u) and in that the output interface elements are used for deciding, in the case of a mismatch of the source numbers (Q) found in the second evaluation, which of the two non-matching source numbers (Q) is correct and thus which information stream (I⁽⁰⁾...I^{(N)}) is to be forwarded in the direction of the terminating subscriber as soon as the source number stored by the communication channel coincides with one of those transmitted in the two switching network planes.

7. Method according to one of the preceding claims, characterized in that in the case of switching networks (SN₀, SN₁) which are set to be asynchronous due to the system used, the second evaluation is only performed when a sufficiently long guard time has elapsed.

8. Method according to Claim 4, 5 or 6, characterized in that, during a restart of the central control platform (CP) after a total failure, the switching-related call data can be regenerated during the initialization process from the source numbers (Q) stored in the output interface elements (DIU(B)).

## Revendications

1. Procédé de surveillance de participation et de réduction d'erreurs sur les bits pour des connexions commutées dans des systèmes de communication ayant un réseau de connexion (SN) constitué d'au moins deux plans de réseaux de connexion (SN₀, SN₁),
caractérisé par le fait que
dans des éléments d'interface côté entrée (DIU(A)) constitués de plusieurs entrées, on munit les mots d'informations (I⁽⁰⁾ à I^{(N)}), arrivant et formant un flux d'informations, d'une information supplémentaire (ZU⁽⁰⁾ à ZU^{(N)}) constituée de deux informations partielles pour chaque mot d'information (I(x)), la première information partielle (ZU₁⁽⁰⁾ à ZU₁^{(N)}) appartenant à un numéro de source (Q) caractéristique de l'entrée concernée des éléments d'interface côté entrée (DIU(A)),
ensuite, à partir des mots d'informations (I⁽⁰⁾ à I^{(N)}) et de la première information partielle (ZU₁⁽⁰⁾ à ZU₁^{(N)}), on forme la deuxième information partielle (ZU₂⁽⁰⁾ à ZU₂^{(N)}), on duplique les mots d'informations (I⁽⁰⁾ à I^{(N)}) avec l'information partielle (ZU⁽⁰⁾ à ZU^{(N)}) et on les retransmet à chaque fois par l'intermédiaire d'un plan de réseau de connexion (SN₀, SN₁) à des éléments d'interface côté sortie (DIU(B)) sélectionnés,
dans les éléments d'interface côté sortie (DIU(B)) sélectionnés, lors d'une première évaluation des mots d'informations (I⁽⁰⁾ à I^{(N)}) et de la première information partielle (ZU₁⁽⁰⁾ à ZU₁^{(N)}) transmise conjointement, on forme de nouveau une deuxième information partielle (ZU₂⁽⁰⁾ à ZU₂^{(N)}) que l'on compare à la deuxième information partielle transmise conjointement et on effectue lors d'une deuxième évaluation une comparaison bit à bit des mots d'informations (I⁽⁰⁾ à I^{(N)}) et de la première information partielle (ZU₁⁽⁰⁾ à ZU₁^{(N)}) transmise conjointement, et
les éléments d'interface côté sortie (DIU(B)), en coopérant avec une plate-forme de commande centrale (CP) et en fonction du résultat de la première et de la deuxième évaluation, retransmettent à chaque fois à l'abonné final un des mots d'informations (I⁽⁰⁾ à I^{(N)}) commutés en parallèle.

2. Procédé selon la revendication 1,
caractérisé par le fait que
la deuxième information partielle (ZU₂⁽⁰⁾ à ZU₂^{(N)}) est un bit de contrôle obtenu à partir d'une somme binaire transversale du mot d'information (I⁽⁰⁾ à I^{(N)}) considéré et de la première information partielle (ZU₁⁽⁰⁾ à ZU₁^{(N)}) associée.

3. Procédé selon la revendication 1 ou 2,
caractérisé par le fait que,
si la combinaison de la première et de la deuxième évaluation ne permet pas d'attribuer l'erreur, on effectue la commutation, orientée sur les mots d'informations, par l'intermédiaire du plan de réseau de connexion (SN₀, SN₁) ayant les meilleures données statistiques de qualité.

4. Procédé selon la revendication 1, 2 ou 3,
caractérisé par le fait que,
pour chaque établissement de connexion, on mémorise le numéro de source (Q) dans les éléments d'interface côté sortie (DIU(B)) au moyen de la plate-forme de commande centrale (CP) et par l'intermédiaire d'un canal de communication et, lors d'une inégalité, déterminée lors de la deuxième évaluation, des numéros de sources (Q) commutés par l'intermédiaire des deux plans de réseaux de connexion, les éléments d'interface côté sortie (DIU(B)) retransmettent en direction de l'abonné final, en tenant compte des numéros de sources (Q) mémorisés, le flux d'informations (I⁽⁰⁾ à I^{(N)}) dont le numéro de source (Q) transmis conjointement est identique à celui mémorisé dans les éléments d'interface côté sortie (DIU(B)).

5. Procédé selon la revendication 1, 2 ou 3,
caractérisé par le fait que,
lors d'une inégalité, déterminée lors de la deuxième évaluation, des numéros de sources (Q), les éléments d'interface côté sortie (DIU(B)) envoient un message à la plate-forme de commande centrale (CP) qui exploite alors le numéro de source (Q), mémorisé en interne et associé au flux d'informations (I⁽⁰⁾ à I^{(N)}), comme critère supplémentaire pour déterminer lequel des deux flux d'informations ou numéros de sources (Q), commutés et différents, est correct, et on envoie le résultat aux éléments d'interface côté sortie (DIU(B)) pour sélectionner le flux d'informations correct.

6. Procédé selon la revendication 1, 2 ou 3,
caractérisé par le fait que
une procédure de transmission (U) transmet de façon cyclique sous la forme des numéros de sources (Q) les relations entre les sources et les destinations, relations mémorisées dans la plate-forme de commande centrale (CP) et déterminant les données de réglage du réseau de connexion (SN), aux éléments d'interface côté sortie (DIU(B)) par l'intermédiaire d'un canal de communication et on exploite ces derniers numéros de sources (Q) dans le cas d'une inégalité, déterminée lors de la deuxième évaluation, des numéros de sources (Q) pour décider lequel des deux numéros de sources (Q) différents est correct et donc lequel des flux d'informations (I⁽⁰⁾ à I^{(N)}) est à retransmettre en direction de l'abonné final dans la mesure où le numéro de source mémorisé par le canal de communication est égal à un numéro de source transmis dans les deux plans de réseaux de connexion.

7. Procédé selon l'une des revendications précédentes,
caractérisé par le fait que,
dans le cas de réseaux de connexion (SN₀, SN₁) fonctionnant de manière asynchrone à cause du système, on effectue la deuxième évaluation seulement après qu'un temps de protection suffisamment long s'est écoulé.

8. Procédé selon la revendication 4, 5 ou 6,
caractérisé par le fait que,
lors d'un redémarrage de la plate-forme de commande centrale (CP) après une panne générale, on peut régénérer pendant le processus d'initialisation les données de connexions se rapportant à la technique de commutation à partir des numéros de sources (Q) mémorisés dans les éléments d'interface côté sortie (DIU(B)).
